Europäisches Patentamt

European Patent Office

Office européen des brevets

(11) Publication number: **0 228 248**
A2

(12) **EUROPEAN PATENT APPLICATION**

(21) Application number: **86309880.2**

(22) Date of filing: **17.12.86**

(51) Int. Cl.4: **B 01 D 13/04**

(30) Priority: **17.12.85 JP 283285/85**

(43) Date of publication of application:
**08.07.87 Bulletin 87/28**

(84) Designated Contracting States:
**DE FR GB IT NL SE**

(71) Applicant: **NITTO ELECTRIC INDUSTRIAL CO., LTD.**
**1-2, Shimohozumi 1-chome Ibaraki-shi**
**Osaka 567 (JP)**

(72) Inventor: **Kakuse, Yoshitaka Nitto Electric Ind. Co., Ltd.**
**1-2, Shimohozumi 1-chome**
**Ibaraki-shi Osaka (JP)**

**Iwama, Akio Nitto Electric Ind. Co., Ltd.**
**1-2, Shimohozumi 1-chome**
**Ibaraki-shi Osaka (JP)**

**Shintani, Takuji Nitto Electric Ind. Co., Ltd.**
**1-2, Shimohozumi 1-chome**
**Ibaraki-shi Osaka (JP)**

(74) Representative: **Moore, Anthony John et al**
**Gee & Co. Chancery House Chancery Lane**
**London WC2A 1QU (GB)**

(54) Composite semipermeable membranes.

(57) A composite semipermeable membrane comprises a porous substrate having on its surface an ultrathin membrane as a surface layer and a porous layer of water-insoluble polyvinyl alcohol as an internal layer integrally supporting the ultrathin membrane. The composite semipermeable membrane is produced by coating or impregnating an aqueous solution containing polyvinyl alcohol and the amino compound having at least two primary amino groups on or in the porous substrate, bringing the coated or impregnated porous substrate into contact with a solution of a polyfunctional crosslinking agent to obtain the ultrathin membrane, and then heating the substrate, preferably followed by treatment with a monohydric or polyhydric alcohol. The crosslinking agent is capable of reacting with the primary amino groups and the hydroxyl groups.

EP 0 228 248 A2

**Description**

## COMPOSITE SEMIPERMEABLE MEMBRANES

This invention relates to composite semipermeable membranes having excellent chlorine resistance, chemical resistance and heat resistance, as well as high selective permeability, and to a process for their production.

Office of Saline Water Research and Development Progress-Reports PB-253193 (1976) and PB-288387 (1978) disclose a process for producing a composite membrane useful as a semipermeable membrane for reverse osmosis and ultra-filtration, which comprises coating an amino compound such as phenylenediamine or piperazine on a porous substrate and crosslinking it with an aldehyde or an acid chloride. The reports describe that a certain piperazine-acid chloride composite membrane has superior chlorine resistance and exhibits a relatively good membrane performance in operation under low pressures. However, its water permeability is not satisfactory. Furthermore, since in this process, the amino compound is coated on the porous substrate and then crosslinked and polymerized, it is difficult to cover the micropores of the substrate completely with the resulting crosslinked polymer layer. The process therefore has the disadvantage that defects tend to occur in the membrane, and it is difficult to produce a composite semipermeable membrane of high performance with good reproducibility.

Japanese Patent Application (OPI) No. 27102/1982 (the term "OPI" as used herein refers to a "published unexamined Japanese patent application") discloses a process for producing a composite semipermeable membrane having improved chlorine resistance and water permeability, which comprises coating an aqueous solution containing polyvinyl alcohol and an amino compound having at least two secondary amino groups in the molecule on a porous substrate, bringing the coating into contact with a polyfunctional cross-linking agent, and then heating the coating. The resulting membrane has high water permeability under low operating pressures and excellent chlorine resistance, but its selective separability is not satisfactory. Particularly, the rejection of monovalent salts under low pressures is low.

The aim of this invention is to overcome the above problems of conventional composite semipermeable membranes and the treatment of aqueous solutions using these membranes.

The composite semipermeable membrane according to this invention comprises a porous substrate having on its surface an ultrathin membrane as a surface layer and a porous layer of water-insoluble polyvinyl alcohol as an internal layer integrally supporting the ultrathin membrane, the ultrathin membrane being obtained by crosslinking polymerization of polyvinyl alcohol and an amino compound having a least two primary amino groups in the molecule in the presence of at least one polyfunctional crosslinking agent capable of reacting with the primary amino groups and the hydroxyl groups.

The process for producing a composite semipermeable membrane according to this invention comprises coating or impregnating an aqueous solution containing polyvinyl alcohol and an amino compound having at least two primary amino groups in the molecule on or in a porous substrate, bringing the coated or impregnated porous substrate into contact with a solution of at least one polyfunctional crosslinking agent capable of reacting with the primary amino groups and the hydroxyl groups in an organic solvent immiscible with the aqueous solution to induce crosslinking polymerization of polyvinyl alcohol and the amino compound, and then heating the substrate.

According to the process of this invention, the resulting dry composite semipermeable membrane may be treated with an alcohol to greatly increase its flux while maintaining its rejection, or to increase both the rejection and the flux.

The composite semipermeable membrane according to this invention has excellent oxidation resistance, and high water permeability and high selective separability under low operating pressures. Moreover, the membrane has a high rejection of a monovalent inorganic salt such as sodium chloride under low operating pressures.

The polyvinyl alcohol used in this invention is a water-soluble polymer having a degree of saponification of 87 to 99 mole% and a degree of polymerization of 300 to 3,000.

It is easily available commercially. The polyvinyl alcohol having a degree of polymerization of at least 1,000 is preferably used in this invention although the invention is not limited thereto.

The amino compound used in this invention is an aliphatic, alicyclic, aromatic or hetero-aromatic amino compound having at least two primary amino groups in the molecule and preferably having a solubility in water of at least 0.1% by weight at room temperature. Specific examples of the amino compound include ethylenediamine, hexamethylenediamine, 1,3-diaminocyclohexane, m-phenylenediamine, p-phenylenediamine, 3,5-diaminopyridine, 4,6-diamino-s-triazin-2-ol, 3-aminobenzylamine, 1,3-diaminoxylene, 1,4-diaminoxylene, 1,3,5-triaminobenzene, 3,5-diaminochlorobenzene, 3,5-diaminobenzylalcohol, 5-nitrophenylenediamine, 5-carboxyphenylenediamine, 5-hydroxyphenylenediamine, 5-methylphenylenediamine and 5-methoxyphenylenediamine. These amino compounds are used alone or as mixtures thereof.

In the composite semipermeable membrane of this invention, polyvinyl alcohol and the amino compound are crosslinked with at least one polyfunctional crosslinking agent on a porous substrate to form a semipermeable dense ultrathin membrane. This ultrathin membrane is produced by coating or impregnating a solution of the polyvinyl alcohol and amino compound on or in the porous substrate and then bringing the coated or impregnated substrate into contact with the polyfunctional crosslinking agent.

Preferably, water is used as a solvent to prepare a mixed solution of the polyvinyl alcohol and amino compound (hereinafter referred to as "starting solution"). The starting solution is prepared by mixing l00 parts by weight of polyvinyl alcohol with l0 to 500 parts by weight, preferably 20 to 300 parts by weight, of the amino compound so that the total concentration of the polyvinyl alcohol and amino compound will be 0.05 to l0% by weight, preferably 0.l to 5% by weight. The starting solution may contain a surface-active agent to reduce its surface tension at the time of coating or impregnation on or in the porous substrate. If a by-product such as hydrochloric acid is formed during crosslinking with the crosslinking agent, the starting solution may contain a scavenger for the by-product, for example, sodium hydroxide, aqueous ammonia or sodium phosphate.

The porous substrate used in this invention may generally be a membranous material having an asymmetric structure which has a surface pore diameter of 50 to 5,000 Å and a pure water flux (hereinafter referred to as "membrane constant"), after l hour under a pressure of at least 3.5 kg/cm$^2$, of l0$^{-5}$ g/cm$^2$•sec•atm or more, preferably l0$^{-4}$ to l0$^{-1}$ g/cm$^2$•sec•atm Preferred polymers for use in producing such a membranous material include, for example, polysulfone, polyacrylonitrile, cellulose esters, polypropylene and polyvinyl chloride. The porous substrate may be reinforced by lining it with a woven or nonwoven cloth.

The amount of the starting solution containing the polyvinyl alcohol and amino compound coated on the porous substrate is 0.05 to 5 g/m$^2$, preferably 0.l to l g/m$^2$, calculated as solids. If required, after coating the starting solution on the porous substrate, the amount of the solution coated may be adjusted to the above range by such an operation as air-drying, draining or pressing with a rubber roll.

The polyfunctional crosslinking agent used in this invention is a compound containing two or more functional groups capable of reacting with the primary amino groups and the hydroxyl groups, for example, those functional groups which are selected from acid halides, halosulfonyl groups, N-haloformyl groups, haloformate groups and acid anhydride groups. Preferred specific polyfunctional crosslinking agents are isophthaloyl chloride, terephthaloyl chloride, trimesyl chloride, trimellitoyl trichloride, trimellitoyl chloride anhydride, l,3-benzenedisulfonyl dichloride, dipicolinoyl dichloride, 5-chlorosulfonyl isophthaloyl chloride and piperazine-N,N'-dicarboxylic chloride.

To bring the coated layer of the starting solution containing the polyvinyl alcohol and amino compound into contact with the polyfunctional crosslinking agent, there is preferably employed a method comprising dissolving the polyfunctional crosslinking agent in an organic solvent immiscible with the solvent forming the starting solution and contacting the resulting solution with the coated layer of the starting solution, or a method comprising contacting the coated layer of the starting solution with a vapor of the polyfunctional crosslinking agent.

In contacting the crosslinking agent solution with the coated layer of the starting solution, the solvent for the crosslinking agent should not dissolve or swell the porous substrate. Preferably, a hydrocarbon solvent having a solubility parameter of 7.0 to 9.0 is used. Aliphatic or alicyclic hydrocarbons having 5 to 8 carbon atoms are preferred. Preferred examples of such solvents are pentane, hexane, heptane, octane, cyclopentane, cyclohexane, petroleum ether, etc. Trichlorotrifluoroethane is also an example of the preferred solvents. The concentration of the crosslinking agent solution is usually 0.05 to l0% by weight, preferably 0.l to 5% by weight. The temperature and time used to contact the coated layer of the starting solution with the crosslinking agent solution vary depending upon the type or concentration of the crosslinking agent used or the concentration of the starting solution or the type of the amino compound. Usually, the contacting is effected at l0 to 60°C, for example, at room temperature, for 5 seconds to l0 minutes, preferably 20 seconds to 5 minutes.

When the coated layer of the starting solution is brought into contact with a vapor of the crosslinking agent, the vapor pressure of the vapor of the crosslinking agent is usually at least 0.l mmHg, preferably at least 0.2 mmHg, at temperature of l00°C or less although it varies depending upon the type of the crosslinking agent or the contacting temperature. The contacting temperature is usually 5 to 90°C, preferably 20 to 70°C, and the contacting time is 0.l second to 30 minutes, preferably l second to 5 minutes.

In order to perform the crosslinking with good reproducibility and obtain a composite semipermeable membrane of high performance, the vapor pressure of the crosslinking agent at the contacting temperature, [V(mmHg)], and the contacting time [T(seconds)] are determined such that the VT value defined by V log T is at least 0.l, particularly at least 0.3. There is no particular restriction on the upper limit of the VT value, but usually the VT is l,000 or less.

During the contacting of the coated layer of the starting solution with the vapor of the crosslinking agent, gases not participating in the crosslinking reaction, for example, air, carbon dioxide gas, organic furon and inert gases, may be present together.

Since the crosslinking agent solution immiscible with the starting solution or the vapor of the crosslinking agent is contacted with the coated layer of the starting solution on the porous substrate, the present invention can give a composite semipermeable membrane having a dense ultrathin membrane resulting from the crosslinking of polyvinyl alcohol and the amino compound with the crosslinking agent, and a porous layer of water-insoluble polyvinyl alcohol as an internal layer supporting the ultrathin membrane.

The thickness of the dense ultrathin film, which varies depending upon the concentration of polyvinyl alcohol or the amino compound in the starting solution or the time during which the coated layer is contacted with the crosslinking agent, is usually 50 to 800 Å, preferably l00 to 500 Å. If it is too small, localized defects tend to occur on the membrane surface. If it is too large, the water permeability of the membrane is undesirably reduced.

3

The porous substrate coated or impregnated with the starting solution and then contacted with the crosslinking agent is then heat-treated. The heat-treatment is carried out in order to complete crosslinking of polyvinyl alcohol and the amino compound in the ultrathin membrane with the crosslinking agent, water-solubilize the unreacted polyvinyl alcohol which exists between the ultrathin membrane and the porous substrate and has not participated in the crosslinking reaction in the interior of the coated layer of the starting solution and at the same time evaporate off the unreacted amino compound out of the membrane. Hence, the heating temperature is selected so as to insolubilize the unreacted polyvinyl alcohol and to evaporate off the unreacted amino compound. It is usually 30 to 180° C, preferably 50 to 130° C. The heating time is 1 to 60 minutes, preferably 3 to 30 minutes. After the heat-treatment, the unreacted amino compound evaporates from the composite semipermeable membrane of this invention, and numerous minute pores are formed in the interior of the water-insoluble polyvinyl alcohol layer. Since the ultrathin membrane is integrally supported on the porous polyvinyl alcohol layer, it has much higher water permeability and higher selective separability than conventional composite semipermeable membranes of the same kind.

Furthermore, according to this invention, the flux of the composite semipermeable membrane obtained as above can be increased while retaining its rejection by treating it with an alcohol. When the alcohol present in the alcohol-treated membrane is replaced with water by immersing it in water or passing water forcibly through it, the resulting composite semipermeable membrane has a much higher flux than when it is simply treated with water without alcohol treatment. The alcohol is used normally as an aqueous solution having an alcohol concentration of at least 10 % by weight.

It has previously been known that by impregnating a wet membrane formed by a wet film-forming method with an alcohol and heating the impregnated membrane, a dried membrane is obtained while preventing its marked shrinkage. It has been unexpectedly found in accordance with the present invention that the flux of the dry membrane can be increased by treating it with an alcohol.

The alcohol treatment of the dry composite semipermeable membrane in accordance with this invention may be effected, for example, by immersing the composite semipermeable membrane in an alcohol, or passing an alcohol forcibly through the membrane under elevated or reduced pressure. The treating temperature, which may vary depending upon the kind of the alcohol used, is usually 0 to 100° C, preferably 10 to 40° C, and more preferably room temperatures. The treating time, which may vary depending upon the treating temeprature, is usually several tens of seconds to 24 hours, preferably about 30 minutes to 5 hours, in the case of immersing the membrane in the alcohol, and usually several seconds to 6 hours, preferably several minutes to 2 hours, in the case of forcibly passing the alcohol through the membrane.

The alcohol used in the above treatment is a monohydric or polyhydric alcohol. Aliphatic lower and slightly higher alcohols are preferred as the monohydric alcohol. Specific examples of the alcohol are methanol, ethanol, isopropanol, n-propanol, n-butanol, tert-butanol and n-pentanol. Monools as ethers of polyhydric alcohols are also included within the category of the monohydric alcohol in this invention, and examples of such monohydric alcohols include ethylene glycol monomethyl ether and ethylene glycol monoethyl ether. Examples of the polyhydric alcohol include ethylene glycol, diethylene glycol, triethylene glycol, propylene glycol, dipropylene glycol, propylene glycol monomethyl ether and glycerol. These alcohols may be used alone or as a mixture of two or more.

Since according to this invention, polyvinyl alcohol and a specific amino compound are crosslinked to a high degree with a crosslinking agent to form a dense ultrathin membrane, there can be obtained a composite semipermeable membrane which has excellent durability in regard to chlorine resistance, heat resistance, alkali resistance and acid resistance and very good basic properties of selective separability and flux under low operating pressures.

Furthermore, since the solution of the polyvinyl alcohol and amino compound has a moderate viscosity, it can be uniformly coated on the porous substrate and by crosslinking and polymerizing these compounds, a uniform ultrathin membrane can be formed covering completely the micropores of the substrate. Consequently, a composite semipermeable membrane having a constant membrane performance can be obtained with good reproducibility.

Treatment of the resulting dry composite semipermeable membrane with the alcohol makes it possible to increase the flux of the membrane further while retaining a high rejection, or to increase both the flux and the rejection further.

The composite semipermeable membrane according to this invention can be effectively used to treat an aqueous solution of a monovalent salt under low pressures such as 2 to 30 kg/cm². For instance, when an aqueous solution of sodium chloride is treated under low pressures, for example, a pressure of 10 kg/cm², using the composite semipermeable membrane of this invention, the salt can be removed at a rejection of about 90% or more. Furthermore, the use of the composite semipermeable membrane of this invention enables organic compounds or low molecular weights such as alcohols or ketones to be removed at a high rejection from their aqueous solutions.

The following Examples illustrate the present invention more specifically. It should be understood that the invention is in no way limited to these Examples.

In these Examples, the rejection is a value defined by the following equation.

$$Rejection = (1 - \frac{\text{Concentration of the solute in the membrane permeated liquid}}{\text{Concentration of the solute in the aqueous solution to be treated}}) \times 100 \ (\%)$$

## EXAMPLE 1

An aqueous solution containing 0.5 % by weight of polyvinyl alcohol (degree of polymerization 1,000; "Poval 224" made by Kuraray Inc.), 0.5 % by weight of m-phenylenediamine and 0.5 % by weight of sodium hydroxide was uniformly coated on a porous substrate (membrane constant $1.02 \times 10^{-2}$ $g/cm^2 \cdot sec \cdot atm$) made of polysulfone (P-3500 made by Union Carbide Corporation). The coated layer was dipped for 20 seconds in an n-hexane solution containing 2 % by weight of trimesic chloride at a temperature of 25°C. Then, the substrate was withdrawn and the n-hexane adhering to the membrane surface was evaporated. The coated substrate was then heat-treated at a temperature of 110°C for 4 minutes.

An aqueous solution containing 2,000 ppm of sodium chloride was fed to the resulting composite semipermeable membrane at a temperature of 25°C under a pressure of 10 $kg/cm^2$ to perform a reverse osmosis test. After 24 hours, the flux was 1.0 $m^3/m^2 \cdot day$ and the rejection was 97.1 %. Subsequently, the operation was carried out continuously for 150 hours, but no reduction in membrane performance was observed.

## EXAMPLE 2

Composite semipermeable membranes were produced in the same way as in Example 1 except that the amino compounds shown in Table 1 were used respectively instead of m-phenylenediamine. These semipermeable membranes were subjected to a reverse osmosis test under the same conditions as in Example 1, and the results are shown in Table 1.

## Table 1

| Amino Compound | Flux $(m^3/m^2 \cdot day)$ | Rejection $(\%)$ |
|---|---|---|
| 1,3-Diaminocyclohexane | 1.23 | 92.9 |
| Ethylenediamine | 1.39 | 95.4 |
| p-Phenylenediamine | 0.96 | 95.7 |
| 3,5-Diaminopyridine | 1.15 | 90.6 |
| 5-Carboxyphenylenediamine | 1.85 | 88.7 |

## EXAMPLE 3

Composite semipermeable membranes were produced in the same way as in Example 1 except that an n-hexane solution containing each of the crosslinking agents indicated in Table 2 was used instead of the trimesic chloride solution. These semipermeable membranes were subjected to a reverse osmosis test under the same conditions as in Example 1, and the results are shown in Table 2.

## Table 2

| Crosslinking Agent | Flux $(m^3/m^2 \cdot day)$ | Rejection (%) |
|---|---|---|
| Isophthaloyl chloride | 0.76 | 93.9 |
| Isophthaloyl chloride/ trimesyl chloride (3/1) | 0.91 | 94.4 |
| Isophthaloyl chloride/ benzene-m-disulfonyl chloride (1/1) | 0.96 | 89.9 |
| Terephthaloyl chloride | 0.85 | 92.1 |

Note: The parenthesized figures show weight ratios.

EXAMPLE 4

A composite semipermeable membrane was produced in the same way as in Example I except that after coating the substrate with the starting solution, the coated substrate was contacted with a vapor or trimesic chloride under condition of a VT value of 0.4. When subjected to a reverse osmosis test under the same conditions as in Example I, this composite semipermeable membrane had a flux of I.2I $m^3/m^2 \bullet day$ and a rejection of 96.9 %.

EXAMPLE 5

The composite semipermeable membrane obtained in Example I was immersed for three days in an aqueous solution having a pH of II.3 and a chlorine concentration of I00 ppm at room temperature, and its reverse osmosis characteristics before and after immersion were evaluated. The composite semipermeable membrane before immersion had a flux of I.02 $m^3/m^2 \bullet day$ and a rejection of 97.0 %, and a flux of I.04 $m^3/m^2 \bullet day$ and a rejection of 96.9 % after immersion. This showed the composite semipermeable membrane to have very superior chlorine resistance.

EXAMPLE 6

An aqueous solution of each of the organic compounds indicated in Table 3 was subjected to a reverse osmosis test under the same conditions as in Example I. The results are shown in Table 3. The results demonstrates that the composite semipermeable membrane of this invention also had high selective separability with regard to organic compounds.

## Table 3

| Organic Compound | Concentration (ppm) | Flux $(m^3/m^2 \cdot day)$ | Rejection (%) |
|---|---|---|---|
| Methanol | 500 | 1.15 | 32.1 |
| Isopropanol | 500 | 1.11 | 84.3 |
| Acetic acid | 50 | 1.03 | 41.2 |
| Acetone | 500 | 1.05 | 81.2 |
| N-Methylpyr-rolidone | 500 | 1.06 | 92.8 |

COMPARATIVE EXAMPLE I

An aqueous solution containing 0.25 % by weight of polyvinyl alcohol (degree of polymerization l000, "Poval 224" made by Kuraray Inc.), 0.25% by weight of each of the secondary diamines shown in Table 4 and 0.5 % by weight of sodium hydroxide was uniformly coated on a porous substrate (membrane constant l.02 × l0⁻² g/cm²•sec•atm) composed of polysulfonate ("P-3500" made by Union Carbide Corporation). The coated layer was dipped for 20 seconds in an n-hexane solution containing 2 % by weight of trimesic chloride at a temperature of 25°C. The substrate was then withdrawn, and the n-hexane adhering to the membrane surface was evaporated. The coated substrate was then heat-treated at a temperature of ll0°C for 4 minutes.

The resulting composite semipermeable membranes were subjected to a reverse osmosis test under the same conditions as in Example I, and the results are shown in Table 4. It is seen that the composite semipermeable membrane obtained in this Comparative Example has a much lower rejection of sodium chloride than the composite semipermeable membrane obtained in Example I.

## Table 4

| Amino Compound | Flux $(m^3/m^2 \cdot day)$ | Rejection (%) |
|---|---|---|
| N,N'-Dimethylethylene-diamine | 1.08 | 67.8 |
| Homopiperazine | 1.14 | 55.2 |
| Piperazine | 1.21 | 60.8 |
| 2,5-Dimethylpiperazine | 1.03 | 59.7 |
| N,N'-Dimethyl-m-phenylenediamine | 0.88 | 69.7 |
| 1,3-Dipiperazylpropane | 1.11 | 64.7 |

EXAMPLE 7

The dried composite semipermeable membrane obtained in Example I was immersed for I hour in methanol at room temperature. Water was then forcibly passed through the composite semipermeable membrane, and the treated membrane was subjected to a reverse osmosis test under the same conditions as in Example I. It had a flux of l.5l m3/m2•day and a rejection of 96.5 %.

It was thus found that by treating the resulting dried composite semipermeable membrane with an alcohol, its flux can be markedly increased while maintaining a high rejection.

EXAMPLE 8

A dried composite semipermeable membrane produced in the same way as in Example I using ethylenediamine as the primary diamine was immersed for 8 hours in ethanol at room temperature. Water was forcibly passed through the composite semipermeable membrane, and the treated membrane was subjected to a reverse osmosis test under the same conditions as in Example I. The treated membrane had a flux of 2.2 $m^3/m^2 \bullet day$ and a rejection of 95.9 %.

Thus, it was found that by treating the resulting dried composite semipermeable membrane with an alcohol, the flux and rejection of the membrane can be increased remarkably.

EXAMPLE 9

A dried composite semipermeable membrane obtained in the same way as in Example I using 5-carboxyphenylenediamine as the primary diamine was immersed for 24 hours in a 20 % by weight aqueous solution of glycerol at room temperature, and then water was forcibly passed through the membrane. The treated membrane was subjected to a reverse osmosis test under the same conditions as in Example I. The resulting membrane had a flux of 3.03 $m^3/m^2 \bullet day$ and a rejection of 88.3 %.

It was thus seen that the flux of the dried composite semipermeable membrane can be increased by treating it with a polyhydric alcohol.

COMPARATIVE EXAMPLE 2

A composite semipermeable membrane was produced in the same way as in Example I except that an aqueous solution containing 0.5 % by weight of polyvinyl alcohol and 0.5 % by weight of sodium hydroxide and being free from an amino compound was used as the starting solution. The resulting composite semipermeable membrane was subjected to a reverse osmosis test under the same conditions as in Example I. The membrane showed a flux of 7.0 $m^3/m^2 \bullet day$ and a rejection of I0.8 %.

COMPARATIVE EXAMPLE 3

A composite semipermeable membrane was produced in the same way as in Example I except that an aqueous solution containing 2 % by weight of m-phenylenediamine and I % by weight of sodium hydroxide was used as the starting solution. The resulting composite semipermeable membrane was subjected to a reverse osmosis test under the same conditions as in Example I. It had a flux of 0.26 $m^3/m^2 \bullet day$ and a rejection of 90.5 %.

**Claims**

1. A composite semipermeable membrane characterised in that it comprises a porous substrate having on its surface an ultrathin membrane as a surface layer and a porous layer of water-insoluble polyvinyl alcohol as an internal layer integrally supporting the ultrathin membrane, said ultrathin membrane being obtained by crosslinking polymerization of polyvinyl alcohol and an amino compound having at least two primary amino groups in the molecule in the presence of at least one polyfunctional crosslinking agent capable of reacting with the primary amino groups and the hydroxyl groups.

2. A membrane as claimed in claim 1, wherein the polyfunctional crosslinking agent contains in its molecule at least two functional groups selected from acid halide groups, N-haloformyl groups, haloformate groups, halosulfonyl groups and acid anhydride groups.

3. A membrane as claimed in claim 1 or 2, wherein the porous substrate is formed of polysulfone, polyacrylonitrile, a cellulose ester, polypropylene or polyvinyl chloride.

4. A process for producing a composite semipermeable membrane, characterised in that it comprises coating or impregnating an aqueous solution containing polyvinyl alcohol and an amino compound having at least two primary amino groups in the molecule on or in a porous substrate, bringing the coated or impregnated porous substrate into contact with a solution of at least one polyfunctional crosslinking agent capable of reacting with the primary amino groups and the hydroxyl groups in an organic solvent immiscible with the aqueous solution to induce crosslinking polymerization of polyvinyl alcohol and the amino compound, and then heating the substrate.

5. A process as claimed in claim 4, wherein said aqueous solution contains 100 parts by weight of the polyvinyl alcohol and 10 to 500 parts by weight of the amino compound.

6. A process as claimed in claim 4 or 5, wherein the polyfunctional crosslinking agent contains in the molecule at least two functional groups selected from acid halide groups, N-haloformyl groups, haloformate groups, halosulfonyl groups and acid anhydride groups.

7. A process as claimed in claim 4, 5 or 6, wherein the solution of the crosslinking agent contains as a solvent an aliphatic or alicyclic hydrocarbon having 5 to 8 carbon atoms.

8. A process as claimed in any one of claims 4 to 7, wherein the heated substrate is subsequently treated with a monohydric or polyhydric alcohol.

9. A process as claimed in claim 8, wherein the substrate is treated with a monohydric alcohol being an aliphatic alcohol, an alkylene glycol monoether or a polyalkylene glycol monoether.

10. A process as claimed in claim 8, wherein the substrate is treated with a polyhydric alcohol being an alkylene glycol or a polyalkylene glycol.